# FASCICULE DE BREVET EUROPEEN

(11) **EP 1 348 247 B1**
(45) Date de publication et mention de la délivrance du brevet: **02.12.2009**
(21) Numéro de dépôt: 02710080.9
(22) Date de dépôt: 03.01.2002
(51) Int. Cl.: H02G 3/04

(54) **GAINE DE BLINDAGE ELECTROMAGNETIQUE, A DIAMETRE EXTENSIBLE.**
HÜLLE MIT ELEKTROMAGNETISCHER ABSCHIRMUNG, MIT VERSTELLBAREM DURCHMESSER
ELECTROMAGNETIC ARMOUR SLEEVE WITH EXTENSIBLE DIAMETER

(30) Priorité: 03.01.2001 FR 0100279
(43) Date de publication de la demande: 01.10.2003
(73) Titulaire: Tresse Industrie, 63600 Ambert (FR)
(72) Inventeur: OMERIN, Pierre, F-63600 AMBERT (FR); OMERIN, Gabriel, F-63600 AMBERT (FR); CLEMENT, Gilles, F-63600 AMBERT (FR)
(74) Mandataire: Maureau, Philippe
(86) Numéro de dépôt international: PCT/FR2002/000017
(87) Numéro de publication internationale: WO 2002/054554

(56) Documents cités:
- WO-A-95/13495
- US-A- 4 376 229
- US-A- 5 091 604

## Description

La présente invention concerne une gaine de blindage électromagnétique, à diamètre extensible, pour câbles électriques.

Les gaines de blindage ou de surblindage amovibles sont généralement fabriquées par tressage de fils de cuivre, assemblés à plusieurs brins par fusion, pour constituer une gaine tubulaire destinée à recouvrir un ou plusieurs câbles électriques et à en assurer la protection contre les effets néfastes des ondes électromagnétiques. Ces tresses sont fabriquées à partir de fils conducteurs, tels que cuivre, cuivre étamé ou revêtu de tout autre métal (argent, nickel ou autre).

En raison de la très faible mémoire élastique de ces fils, les tresses ainsi constituées peuvent difficilement être compressées axialement pour obtenir une augmentation de leur diamètre nominal destiné à faciliter leur mise en place sur le câble ou le faisceau de câbles à gainer, et plus spécialement à faciliter leur passage sur les connecteurs équipant les extrémités du câble ou du faisceau.

On connaît, par ailleurs, les gaines tressées à diamètre extensible, destinées généralement à la protection mécanique de câbles ou faisceaux de câbles. Ces gaines, qui ne peuvent assurer aucune protection électromagnétique, sont tressées à partir de monofilaments de section ronde ou aplatie, en matière thermoplastique, telle que polyamide, polyester, polypropylène ou autre.

En raison de la forte mémoire élastique de ces matières, il est possible de comprimer axialement la gaine pour en augmenter le diamètre et faciliter sa mise en place sur le câble ou le faisceau de câbles à gainer. Après mise en place et grâce à cette mémoire élastique, la gaine revient à son diamètre initial.

Un premier objet de l'invention est de fournir une gaine de blindage électromagnétique présentant une possibilité d'extension radiale, réversible, similaire à celle des gaines de protection mécanique, afin de faciliter le passage de ce blindage sur les connecteurs et, en particulier, sur les connecteurs larges des faisceaux conducteurs utilisés en électronique.

On connaît, par ailleurs, des gaines composites de blindage électromagnétique dans lesquelles chacun des fuseaux tressés est composé d'une âme, formée par un ou plusieurs brins, et d'un guipage, formé par une bandelette en matériau conducteur de très faible section, en général, enroulée à spires non jointives.

Il en est ainsi, par exemple, dans le document japonais JP-A-9293990 dans lequel l'âme de chaque fuseau est composée de deux brins multifilamentaires fins et le guipage de spires non jointives.

Lors du soudage des extrémités de telles gaines composites sur la pièce de mise à la terre équipant chaque connecteur, il se révèle que, en raison de la faible section des bandelettes conductrices formant le blindage, le ratio métal/plastique est défavorable à la soudabilité de l'ensemble, puisque la quantité de métal est bien inférieure à la proportion de matière non conductrice. En conséquence, la liaison mécanique et la liaison électrique ne sont pas parfaitement assurées.

Le document US-A-5091604 décrit une gaine tressée de blindage électromagnétique selon l'art antérieur.

Un autre objet de l'invention est de fournir une gaine de blindage électromagnétique qui permette de réaliser, lors de son soudage sur les pièces extrêmes, une excellente liaison électrique et mécanique des fils conducteurs.

A cet effet, la gaine tressée de blindage selon l'invention est composée de monofilaments en matière plastique et de fils en matériau conducteur de l'électricité, ces fils et monofilaments étant mêlés dans les mêmes fuseaux ou répartis dans des fuseaux différents et étant déterminés en nombre et dimension transversale, de manière que, dans une section transversale de la gaine tressée, la largeur circonférencielle de la nappe formée par les fils conducteurs soit supérieure à la largeur circonférencielle de la nappe formée par les monofilaments en matière plastique.

Grâce à cet agencement, la gaine tressée de blindage peut être déformée radialement beaucoup plus aisément qu'une tresse métallique et dans un rapport beaucoup plus grand, tout en revenant rapidement à sa forme initiale, sans qu'il soit nécessaire de procéder à des manipulations complexes, comme c'est le cas avec les gaines tressées entièrement métalliques.

Par ailleurs, par leur disposition en long, parallèlement aux fuseaux, les fils conducteurs, et par exemple métalliques, réalisant le blindage peuvent présenter une plus grande section transversale que les bandelettes guipées des blindages connus, ce qui améliore, de façon inattendue, l'impédance du transfert de la gaine de blindage.

Dans une forme d'exécution, et pour améliorer les caractéristiques de protection électromagnétique, au moins certains des monofilaments en matière plastique sont guipés à spires jointives par des fils ou bandelettes en matériau conducteur de l'électricité ou sont revêtus, par métallisation, d'une couche conductrice de l'électricité.

Avec cet aménagement, les caractéristiques du blindage sont améliorées sans que l'effet mémoire procuré par les monofilaments en matière plastique soit perturbé.

Un autre avantage de la gaine tressée de blindage selon l'invention est que, par rapport à une gaine traditionnelle en tresse de fils métalliques, de mêmes caractéristiques, elle est beaucoup plus légère, ce qui est particulièrement intéressant pour son application en aéronautique.

En prévision de cette application, mais aussi dans toutes les applications où la gaine peut être amenée à frotter contre un corps de moindre dureté que celle de ses composants conducteurs et par exemple en matière plastique, au moins certains des monofilaments en matière plastique faisant partie des fuseaux de la gaine tressée ont un diamètre plus grand que celui des fils métalliques disposés dans le même fuseau qu'eux et longitudinalement avec eux.

Avec une telle gaine, le contact sur une surface d'appui est réalisé exclusivement par les monofilaments en matière plastique, et non par les fils métalliques, c'est-à-dire par une matière ayant un très bon coefficient de frottement et de sensiblement même dureté que les surfaces d'appui voisines, ce qui réduit considérablement les usures par frottement de ces surfaces d'appui.

Pour mieux faire comprendre l'invention, il est décrit dans le tableau qui suit quelques exemples de réalisation de gaines tressées.

L'invention ne se limite pas à ces exemples puisque les fils conducteurs peuvent être en cuivre nu, en cuivre argenté, en aluminium, ou en toute autre matière conductrice de l'électricité, et que les monofilaments peuvent être en toute matière plastique ou thermoplastique et, par exemple, en polyamides ou en polyesters.

Grâce à leur possibilité d'extension radiale et à leur structure composite les gaines de blindage selon l'invention s'enfilent très aisément et très rapidement sur un conducteur équipé de ses connecteurs, par exemple en quelques dizaines de secondes au lieu de trente minutes, pour un même conducteur équipé d'un blindage entièrement métallique.

A cet avantage très important s'ajoutent une réduction des coûts de fabrication et un allègement de la gaine.

Le tableau montre que ces avantages se cumulent avec la protection électromagnétique, puisque les valeurs d'impédance de transfert indiquées sont comparables à celles des gaines en tresse métalliques.

| **N° Ex** | **Diamètre nominal de la gaine au repos en mm** | **Rapport d'expansion** | **Caractéristiques des fuseaux** | **Impédance de transfert en dB à 100 MHZ** |
|---|---|---|---|---|
| 1 | 6 | X 2 | 32 fuseaux garnis identiquement de - 8 fils de cuivre diamètre 0,10 mm - 2 monofilaments en P.E.T. de diamètre 0,254 mm | 76 |
| 2 | 6 | X 2,5 | 40 fuseaux garnis différemment : - 10 fuseaux de 1monofilament en P.E.T. de diamètre 0,5 mm - 30 fuseaux composés de 10 fils de cuivre étamé de diamètre 0,07 mm. | 45 |
| 3 | 6 | X 2,5 | 48 fuseaux garnis différemment: - 24 fuseaux de 1 monofilament en P.E.T. ayant un diamètre de 0,22 mm guipé par du cuivre argenté avec recouvrement à spires jointives, (matière et diamètre) - 24 fuseaux de 10 fils de cuivre de 0,08 mm. | 50 |
| 4 | 6 | X 3 | 64 fuseaux garnis différemment : - 32 fuseaux en 8 fils de cuivre ayant un diamètre de 0,10 mm, - 32 fuseaux de 2 monofilaments en P.E.T. ayant un diamètre de 0,254 mm | 72 |

## Revendications

1. Gaine tressée de blindage électromagnétique à diamètre extensible pour câble électrique, **caractérisée en ce qu'**elle est composée de monofilaments en matière plastique et de fils en matériau conducteur de l'électricité, ces fils et monofilaments étant mêlés dans les mêmes fuseaux ou répartis dans des fuseaux différents et étant déterminés en nombre et dimension transversale de manière que, dans une section transversale de la gaine tressée, la largeur circonférencielle de la nappe formée par les fils conducteurs soit supérieure à la largeur circonférencielle de la nappe formée par les monofilaments en matière plastique.

2. Gaine tressée de blindage électromagnétique selon la revendication 1, **caractérisée en ce que**, au moins certains des monofilaments en matière plastique sont guipés à spires jointives par des fils ou bandelettes en matériau conducteur de l'électricité.

3. Gaine tressée de blindage électromagnétique selon la revendication 1, **caractérisée en ce que**, au moins certains des monofilaments en matière plastique sont revêtus, par métallisation, d'une couche conductrice de l'électricité.

4. Gaine tressée de blindage électromagnétique selon la revendication 1, **caractérisée en ce que**, au moins certains des monofilaments en matière plastique faisant partie des fuseaux de la gaine tressée ont un diamètre plus grand que celui des fils conducteurs disposés dans le même fuseau qu'eux, et longitudinalement avec eux.

5. Gaine tressée de blindage électromagnétique selon la revendication 4, **caractérisée en ce que** le diamètre d'un monofilament en matière plastique est compris entre 0,20 et 0,50 mm et le diamètre des fils conducteurs est compris entre 0,07 et 0,10 mm.

## Claims

1. A braided electromagnetic shielding sheath with an extensible diameter for an electric cable, **characterized in that** it consists of monofilaments in a plastic material and of wires in an electricity-conducting material, these wires and monofilaments being mingled in the same spindles or distributed in different spindles and being determined in number and tranverse dimension so that, in a transverse section of the braided sheath, the circumferential width of the web formed by the conducting wires is larger than the circumferential width of the web formed by the monofilaments in plastic material.

2. The braided electromagnetic shielding sheath according to claim 1, **characterized in that** at least some of the monofilaments in plastic material are wrapped with touching turns by wires or strips in electricity-conducting material.

3. The braided electromagnetic shielding sheath according to claim 1, **characterized in that**, at least some of the monofilaments in plastic material are coated with an electricity-conducting layer by metallization.

4. The braided electromagnetic shielding sheath according to claim 1, **characterized in that** at least some of the monofilaments in plastic material being part of the spindles of the braided sheath have a larger diameter than that of the conducting wires positioned in the same spindle as them, and longitudinally with them.

5. The braided electromagnetic shielding sheath according to claim 4, **characterized in that** the diameter of a monofilament in plastic material is comprised between 0.20 and 0.50 mm and the diameter of the conducting wires is comprised between 0.07 and 0.10 mm.

## Patentansprüche

1. Geflochtene Hülle mit elektromagnetischer Abschirmung mit verstellbarem Durchmesser für elektrisches Kabel, **dadurch gekennzeichnet, dass** sie aus Monofilamenten aus Kunststoff und aus Drähten aus stromleitendem Werkstoff besteht, wobei diese Drähte und Monofilamente in denselben Kabelspindeln gemischt oder in verschiedenen Spindeln verteilt und in der Anzahl und Querabmessung derart bestimmt sind, dass in einem Querschnitt der geflochtenen Hülle die Umfangsbreite der Decke, die von den leitenden Drähten gebildet wird, größer ist als die Umfangsbreite der Decke, die von den Monofilamenten aus Kunststoff gebildet wird.

2. Geflochtene Hülle mit elektromagnetischer Abschirmung nach Anspruch 1, **dadurch gekennzeichnet, dass** mindestens einige Monofilamente aus Kunststoff von Drähten oder Streifen aus stromleitendem Werkstoff in verbindenden Windungen umsponnen sind.

3. Geflochtene Hülle mit elektromagnetischer Abschirmung nach Anspruch 1, **dadurch gekennzeichnet, dass** mindestens einige Monofilamente aus Kunststoff durch Metallisierung mit einer stromleitenden Schicht verkleidet sind.

4. Geflochtene Hülle mit elektromagnetischer Abschirmung nach Anspruch 1, **dadurch gekennzeichnet, dass** mindestens einige Monofilamente aus Kunststoff, die Bestandteil der Spindeln der geflochtenen Hülle sind, einen größeren Durchmesser haben als den der leitenden Drähte, die in derselben Spindel wie sie angeordnet sind und längs mit ihnen.

5. Geflochtene Hülle mit elektromagnetischer Abschirmung nach Anspruch 4, **dadurch gekennzeichnet, dass** der Durchmesser eines Monofilaments aus Kunststoff zwischen 0,20 und 0,50 mm inklusive ist und der Durchmesser der leitenden Drähte zwischen 0,07 und 0,10 mm inklusive ist.
